(19)

**Europäisches Patentamt**
**European Patent Office**
**Office européen des brevets**

(11) **EP 4 679 295 A1**

(12) **EUROPEAN PATENT APPLICATION**

(43) Date of publication:
**14.01.2026 Bulletin 2026/03**

(51) International Patent Classification (IPC):
**G06F 17/11** (2006.01)  **G06N 3/086** (2023.01)

(21) Application number: **25185358.6**

(22) Date of filing: **25.06.2025**

(52) Cooperative Patent Classification (CPC):
**G06F 17/11; G06N 3/086; G06N 5/01; G06N 7/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.07.2024 JP 2024111269**

(71) Applicant: **FUJITSU LIMITED**
**Kawasaki-shi, Kanagawa 211-8588 (JP)**

(72) Inventor: **DOTE, Aki**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **COMPUTER PROGRAM, DATA PROCESSING APPARATUS, AND DATA PROCESSING METHOD**

(57) A storage unit stores evaluation function information of an evaluation function of a combinatorial optimization problem including a sum of an objective function and one or more constraint functions including a first constraint function weighted by a first coefficient ($\gamma_t$) representing a weight of a first constraint condition. When repeatedly executing a local search for searching for a solution candidate ($x^*$) of the combinatorial optimization problem using the evaluation function information while changing a value of $\gamma_t$, a processing unit changes the value of $\gamma_t$ in a direction in which a value ($V(x^*)$) of the first constraint function corresponding to $x^*$ obtained by the local search using each value of $\gamma_t$ approaches a target value ($V_{target}$) that is a positive value.

FIG. 1

EP 4 679 295 A1

## Description

FIELD

The embodiments discussed herein relate to a computer program, a data processing apparatus, and a data processing method.

BACKGROUND

There is a local search method as a solution method for obtaining an approximate solution to a combinatorial optimization problem in a practical time. For example, the local search method is a steepest descent method, a greedy method, a tabu search, a Markov Chain Monte Carlo (MCMC)/rejection free method, or a group descent method in which one of these local search methods is executed at once in parallel.

Some combinatorial optimization problems have a constraint condition to be satisfied by a solution. See, for example, Japanese Laid-open Patent Publication No. 2004-361991, US Patent Application Publication No. 2017/0011143, International Publication Pamphlet No. WO 98/06550, and US Patent Application Publication No. 2003/0226122. The constraint condition is an inequality constraint, an equality constraint, or the like. As a method for solving a combinatorial optimization problem having a constraint condition, there is a method of searching for a solution by the use of an evaluation function represented by the sum of an objective function and a constraint function (also referred to as a penalty function). The constraint function is weighted by a constraint coefficient representing the weight of a constraint condition.

If a value of the constraint coefficient is too small, the possibility of obtaining a constraint violation solution increases. On the other hand, if a value of the constraint coefficient is too large, a value of the evaluation function of a constraint violation solution becomes too large. As a result, it becomes difficult to escape from a local solution, and search efficiency may decline. Since an appropriate value of the constraint coefficient varies depending on problems, a method of adaptively adjusting a value of the constraint coefficient according to a predetermined rule without fixing has been proposed. See, for example, the following literatures.

J. C. Bean and A. B. Hadj-Alouane, "A Dual Genetic Algorithm for Bounded Integer Programs," University of Michigan Technical Report 92-53, 1992
Aki Dote and Koji Hukushima, "Effect of Constraint Relaxation on the Minimum Vertex Cover Problem in Random Graphs, "Physical Review E, volume 109, issue 4, page 044304, April 5, 2024

However, with the conventional method of adaptively adjusting a value of the constraint coefficient, a solution is not updated depending on problems even if a search is repeated in a certain value range of the constraint coefficient. That is to say, search efficiency may decline.

SUMMARY

According to an aspect, it is desirable to provide a computer program, a data processing apparatus, and a data processing method which improve efficiency in searching for a solution of a combinatorial optimization problem including a constraint condition.

In one aspect, there is provided a computer program that causes a computer to perform a process including: acquiring, from storage means, evaluation function information of an evaluation function of a combinatorial optimization problem, the evaluation function including a sum of an objective function and one or more constraint functions including a first constraint function weighted by a first coefficient representing a weight of a first constraint condition; and changing, in a course of repeatedly executing a local search for searching for a solution candidate of the combinatorial optimization problem using the evaluation function information while changing a value of the first coefficient, the value of the first coefficient in a direction in which a value of the first constraint function corresponding to the solution candidate obtained by the local search using each value of the first coefficient approaches a target value which is a positive value.

BRIEF DESCRIPTION OF DRAWINGS

The invention is described, by way of example only, with reference to the following drawings, in which:

FIG. 1 illustrates an example of a data processing apparatus and a data processing method according to a first embodiment;
FIG. 2 illustrates an example of the relationship between $\gamma_t$ and $V(x^*)$;

FIG. 3 is a block diagram illustrative of an example of hardware of a data processing apparatus according to a second embodiment;

FIG. 4 is a block diagram illustrative of an example of the function of the data processing apparatus;

FIG. 5 illustrates an example of an LUT;

FIG. 6 is a flowchart illustrative of a first example of a processing procedure by the data processing apparatus;

FIG. 7 is a flowchart illustrative of a second example of a processing procedure by the data processing apparatus;

FIG. 8 is a flowchart illustrative of a third example of a processing procedure by the data processing apparatus;

FIG. 9 illustrates an example of a change in V(x*) with respect to a change in $\gamma_t$;

FIG. 10 is a flowchart illustrative of a procedure for an example of an LUT update process;

FIG. 11 illustrates an example of updating the LUT;

FIG. 12 is a flowchart illustrative of a processing procedure according to modification 1;

FIGS. 13A to 13C illustrate an example of determining a value of $\gamma_t$ based on a relational expression between $\gamma_t$ and V(x*);

FIG. 14 is a flowchart illustrative of a processing procedure taken as a comparative example;

FIGS. 15A and 15B illustrate examples of numerical experiment results obtained in a case where the processing procedure taken as a comparative example and the processing procedure of the first example are applied;

FIG. 16 illustrates an example of the cumulative distribution of the minimum value of E(x) obtained in a case where the processing procedure taken as a comparative example and the processing procedures of the first to third examples are applied;

FIG. 17 illustrates an example of the number of updates of the minimum value of E(x) obtained in a case where the processing procedure taken as a comparative example and the processing procedures of the first to third examples are applied; and

FIG. 18 illustrates another example of the data processing apparatus.

DESCRIPTION OF EMBODIMENTS

Embodiments will now be described with reference to the drawings.

(First Embodiment)

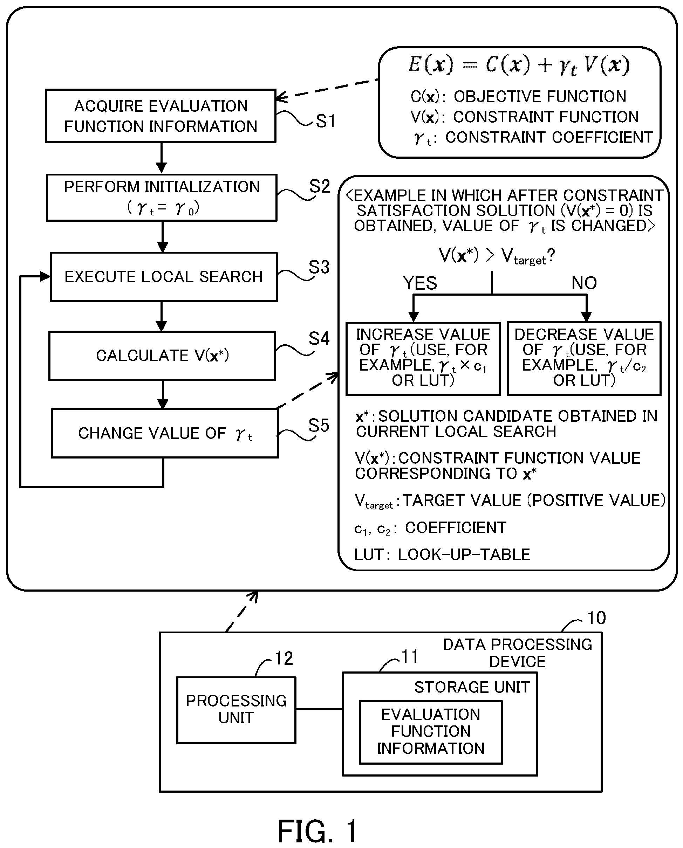

FIG. 1 illustrates an example of a data processing apparatus and a data processing method according to a first embodiment.

A data processing apparatus 10 according to the first embodiment includes a storage unit 11 and a processing unit 12.

The storage unit 11 is a volatile storage device (for example, an electronic circuit such as a dynamic random access memory (DRAM)) or a non-volatile storage device (for example, an electronic circuit such as a flash memory, a hard disk drive (HDD), or the like). The storage unit 11 may include an electronic circuit such as a register.

The storage unit 11 stores evaluation function information of an evaluation function of a combinatorial optimization problem having one or more constraints.

An evaluation function (E(x)) of a combinatorial optimization problem having a constraint condition is expressed by the following expression (1).

$$E(\boldsymbol{x}) = C(\boldsymbol{x}) + \gamma_t V(\boldsymbol{x}) \tag{1}$$

E(x) may also be referred to as total energy, an extended objective function, or the like. In expression (1), x is a state represented using N (N ≥ 2) state variables. In expression (1), FIG. 1, and the like, x is indicated by a bold letter representing a vector (the same applies to the following expressions and drawings). In expression (1), C(x) is an objective function (also referred to as a cost function) and is expressed by, for example, the following Expression (2).

$$C(\boldsymbol{x}) = - \sum_{<i,j>} W_{ij} x_i x_j - \sum_i b_i x_i \tag{2}$$

Value of $x_i$ is 0 or 1. The first term on the right side is obtained by integrating the products of the values (0 or 1) of two state variables and a weight value (representing the strength of an interaction between the two state variables) for all combinations of all state variables ($x_i$) without omission or duplication. $x_i$ is a state variable whose identification number (index) is i, $x_j$ is a state variable whose identification number (index) is j, and $W_{ij}$ is a weight value indicating the magnitude of an interaction between the state variables whose identification numbers (index) are i and j. The second term on the right side is the sum of the products of a bias coefficient and a state variable for each identification number (index). $b_i$ represents a bias coefficient for the identification number (index) = i.

Expression (2) may also be referred to as an Ising type evaluation function.

In expression (1), V(x) is a constraint function (also referred to as a penalty function) for a certain constraint condition. $\gamma_t$ is a coefficient (also referred to as a constraint coefficient) representing the weight of the constraint condition. A constraint condition to be satisfied is f(x) = 0 (equality constraint), g(x) > 0 (inequality constraint), or the like. V(x) is a function that takes a positive value when the constraint condition is not satisfied. If a constraint condition is an equality constraint, for example, $V(x) = f(x)^2$.

There may be a plurality of constraint conditions. In this case, a plurality of constraint functions is used. An independent coefficient is used as a constraint coefficient for each constraint condition.

The evaluation function information stored in the storage unit 11 includes, for example, information of C(x) in expression (1) (such as values of $W_{ij}$ and $b_i$ in expression (2)) and information of V(x).

Furthermore, the storage unit 11 may store the value of the state variable ($x_i$), the value of E(x), the value of C(x), and the value of V(x) during calculation.

In addition, the storage unit 11 may store various data such as calculation conditions at the time of the processing unit 12 executing a data processing method described later. Furthermore, if the processing unit 12 executes a part or all of the data processing method described later by software, a program for executing the data processing method is stored in the storage unit 11.

The processing unit 12 illustrated in FIG. 1 is realized by, for example, a processor, such as a central processing unit (CPU), a graphics processing unit (GPU), or a digital signal processor (DSP), that is hardware. In addition, the processing unit 12 may be realized using an electronic circuit such as an application specific integrated circuit (ASIC) or a field programmable gate array (FPGA) .

The processing unit 12 acquires evaluation function information from the storage unit 11 and executes a local search based on the evaluation function information.

A local search is a method for determining whether the transition from a current state (represented by a combination of values of all state variables) to a neighboring state is possible based on a change amount of a value of an evaluation function obtained when the transition occurs. For example, a state (combination of values of state variables) in which E(x) indicated in expression (1) is minimized is searched for as a solution candidate. A state in which the minimum value of the solution candidates is a candidate of the optimum solution. In order to maximize a value of the evaluation function, changing the sign of the first term of equation (1) results in the problem of searching for the minimum value of E(x).

Examples of a local search method include a steepest descent method, a greedy method, a tabu search method, an MCMC method, a rejection free method, and a group descent method. The steepest descent method is a method of accepting a transition to a state that minimizes a value of the evaluation function among a plurality of neighboring states. The greedy method is a method of repeating a procedure of inverting a value of a state variable in which the amount of a change in the value of the evaluation function is minimized when values of all the state variables are changed, including a direction in which a value of the evaluation function increases, and setting a value obtained as the next state. The tabu search method is a method based on the greedy method, and is a method of preventing a solution from falling into the same local solution by prohibiting for a certain period a change in a value of a state variable whose value has changed. The MCMC method is a method of stochastically determining a neighboring state to which a transition is made next from among a plurality of neighboring states. The rejection free method is a kind of the MCMC method, and is a method in which a transition is not rejected in each trial. The group descent method is a method of simultaneously executing a plurality of local searches described above and generating a state to be searched for next based on the minimum value of values of the evaluation function obtained in each local search. In addition, there is a method called a population descent method in which a local search method is executed in parallel for a plurality of different states to make an efficient search, and there are a path-relinking method, a genetic algorithm, and the like.

With the above local search based on evaluation function information, the possibility of obtaining a constraint violation solution increases if a value of $\gamma_t$ is too small. On the other hand, if a value of $\gamma_t$ is too large, a value of an evaluation function of a constraint violation solution becomes too large, a state transition to a good solution via the constraint violation solution is difficult to occur, and there is a possibility that search efficiency declines.

Therefore, with the data processing apparatus 10 according to the embodiment, the processing unit 12 performs a process for changing a value of $\gamma_t$ in the following way. FIG. 1 illustrates the flow of an example of a data processing method by the processing unit 12.

Step S1: The processing unit 12 acquires evaluation function information from the storage unit 11.

Step S2: The processing unit 12 performs an initialization process. In the initialization process, the processing unit 12 sets a value of $\gamma_t$ to an initial value ($\gamma_0$). $\gamma_0$ is a positive value. For example, $\gamma_0 = 0.1$ is used. Furthermore, in the initialization process, a target value ($V_{target}$) is set. $V_{target}$ is a positive value. $V_{target}$ may be inputted to the data processing apparatus 10 by a user operating an input device or the like. In addition, a state (x) is initialized. For example, a random number value, the value 0, or a value obtained by the group descent method or the like may be used as an initial value of each state variable.

In step S2, a value of a coefficient for changing a value of $\gamma_t$ is further set. Moreover, a termination condition of a local search is set. $V_{target}$, the value of the coefficient, the termination condition, and the like may be inputted from the outside of the data processing apparatus 10.

Step S3: The processing unit 12 executes the local search based on the acquired evaluation function information in a state in which $\gamma_t$ is set to $\gamma_0$ or a value changed in step S5 described later.

Step S4: The processing unit 12 calculates a value of a constraint function (hereinafter referred to as V(x*)) corresponding to a solution candidate (hereinafter referred to as x*) of a combinatorial optimization problem obtained by the local search in step S3.

In the problem of searching for a state in which E(x) becomes a minimum, a state in which a value of E(x) becomes the smallest becomes x* while the update of a state based on the change amount of a value of E(x) is repeated by a local search until a predetermined termination condition is satisfied. The processing unit 12 calculates V(x*), which is a value of V(x) when x* is obtained, based on the evaluation function information. The processing unit 12 stores the calculated V(x*) in the storage unit 11. The processing unit 12 may store E(x*) corresponding to x* in the storage unit 11, together with x*.

At this time, the processing unit 12 may create table information in which V(x*) for each value of $\gamma_t$ used for the local search is recorded and store the table information in the storage unit 11. For example, a look-up-table (LUT) may be used as the table information. In the following description, the table information is an LUT.

Step S5: The processing unit 12 changes a value of $\gamma_t$ in a direction in which V(x*) approaches $V_{target}$. As described later, as a value of $\gamma_t$ decreases, V(x*) tends to increase. Therefore, the processing unit 12 changes a value of $\gamma_t$, for example, in the following way.

It is assumed that a solution candidate obtained in the previous local search is a constraint satisfaction solution. At this time, V(x*) = 0. If V(x*) corresponding to x* obtained in the current local search is larger than $V_{target}$, then the processing unit 12 increases a value of $\gamma_t$. As a result, in the next local search, the amount of a change in the value of E(x) obtained when a constraint violation occurs increases in a positive direction. In the problem of searching for a state in which E(x) is minimized, it is difficult to accept a state transition in which the amount of a change in the value of E(x) greatly increases in the positive direction. Therefore, a constraint violation is less likely to occur, and V(x*) corresponding to a solution candidate obtained in the next local search may be smaller than the current value and the possibility that V(x*) approaches $V_{target}$ increases.

As a method for increasing a value of $\gamma_t$, for example, there is a method of multiplying the original $\gamma_t$ by a coefficient ($c_1$). Alternatively, $\gamma_t$ for making V(x*) approach $V_{target}$ may be determined using the created LUT.

On the other hand, if V(x*) is equal to or smaller than $V_{target}$, then the processing unit 12 decreases a value of $\gamma_t$. This decreases the amount of a change in the positive direction of a value of E(x) obtained if a constraint violation occurs in the next local search. As a result, a state in which a constraint violation is less likely to occur is relaxed, V(x*) corresponding to a solution candidate obtained in the next local search may increase from the current value, and the possibility that V(x*) approaches $V_{target}$ increases .

As a method for decreasing a value of $\gamma_t$, for example, there is a method of dividing the original $\gamma_t$ by a coefficient ($c_2$). Alternatively, $\gamma_t$ for making V(x*) approach $V_{target}$ may be determined using the created LUT.

After step S5, the processing unit 12 repeats the process from step S3 until a predetermined search termination condition is satisfied.

For example, at the time when the predetermined search termination condition is satisfied, the processing unit 12 may output a solution candidate having the smallest value of E(x) among obtained solution candidates as a search result solution, together with the value of E(x). Alternatively, the processing unit 12 may output x* and E(x*) corresponding to x*, which are stored in the storage unit 11 at the time when the predetermined search termination condition is satisfied, as a search result.

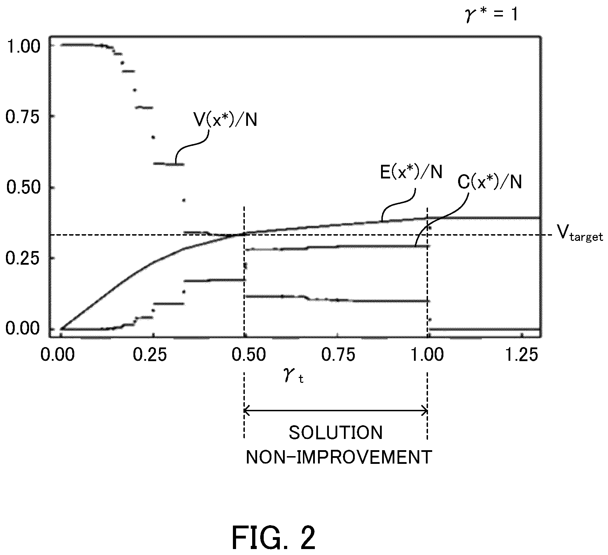

FIG. 2 illustrates an example of the relationship between $\gamma_t$ and V(x*). FIG. 2 illustrates a theoretical analysis example of a minimum vertex covering problem. The minimum vertex covering problem is an example of the combinatorial optimization problem. In FIG. 2, a horizontal axis indicates $\gamma_t$, and a vertical axis indicates the values of C(x*)/N, V(x*)/N, and E(x*)/N (= (C(x*) + $\gamma_t$V(x*)/N), where N is the number of vertices, that is, a number of variables x, and $x_i$ represents each vertex i is covered ($x_i$ = 1) or uncovered ($x_i$ = 0).

In the example of FIG. 2, a value ($\gamma^*$) of $\gamma_t$ at the boundary between a constraint satisfaction state (V(x*) = 0) and a constraint violation state (V(x*) > 0) is 1. Theoretically, V(x*) is a non-increasing function with respect to $\gamma_t$. V(x*) is maximized when $\gamma_t$ = 0, and becomes 0 when $\gamma_t$ > $\gamma^*$. In order to obtain a constraint satisfaction solution, it is preferable that $\gamma_t$ be larger than $\gamma^*$. However, in order to increase search efficiency, it is preferable that $\gamma_t$ be as small as possible. However, $\gamma^*$ is not known in advance, and it is difficult to set a value of $\gamma_t$ to an appropriate fixed value. Therefore, it is preferable to adaptively adjust $\gamma_t$.

In the example of FIG. 2, in the interval of $\gamma_t$ being between 0.50 and 1.00 inclusive (solution non-improvement section), C(x*) hardly changes, and a solution is constrained to a local solution. Which interval of a value of $\gamma_t$ is the solution

non-improvement interval differs depending on combinatorial optimization problems to be calculated. Furthermore, it is not known in advance to which value $\gamma_t$ is decreased to update a minimum value of $E(x^*)$ that satisfies $\gamma_t > \gamma^*$.

As a method of adaptively adjusting $\gamma_t$, there is a method of decreasing a value of $\gamma_t$ in the case of $V(x^*) = 0$ and increasing the value of $\gamma_t$ in the case of $V(x^*) > 0$ (hereinafter, referred to as a method taken as a comparative example). This method differs from the method according to the first embodiment. If the method taken as a comparative example is used, a value of $\gamma_t$ decreases after $V(x^*) = 0$. As a result, since $V(x^*) > 0$, a value of $\gamma_t$ increases. However, depending on the range of an increase or a decrease in the value of $\gamma_t$, a value of $\gamma_t$ may remain within the solution non-improvement section. For this reason, with the method taken as a comparative example, there is a possibility that a good solution is not obtained without escaping from the solution non-improvement interval.

On the other hand, with the data processing apparatus 10 according to the first embodiment, $\gamma_t$ is changed in a direction in which $V(x^*)$ approaches $V_{target}$, which is a positive value. Therefore, as illustrated in FIG. 2, for example, $\gamma_t$ may be changed to a value smaller than the solution non-improvement interval. In this case, a value of $x^*$ changes and escapes from a local solution. In the next and later local searches, a transition to a better solution candidate (for example, a solution candidate in which a value of $E(x)$ is smaller than a previous minimum value and a constraint condition is satisfied) may be made.

As described above, the processing unit 12 acquires the evaluation function information of the evaluation function of the combinatorial optimization problem from the storage unit 11. Furthermore, the processing unit 12 repeatedly executes a local search for searching for a solution candidate of the combinatorial optimization problem by the use of the evaluation function information, while changing a value of $\gamma_t$. At this time the processing unit 12 changes a value of $\gamma_t$ in a direction in which a value of $V(x)$ corresponding to a solution candidate obtained by a local search using each value of $\gamma_t$ approaches $V_{target}$ which is a positive value. As a result, the possibility that a solution escapes from a local solution is increased and the search efficiency of a solution of the combinatorial optimization problem including a constraint condition is improved, compared with the method taken as a comparative example in which a value of $\gamma_t$ is simply decreased if $V(x^*) = 0$ and in which a value of $\gamma_t$ is simply increased if $V(x^*) > 0$.

If $x^*$ (constraint satisfaction solution) that satisfies $V(x^*) = 0$ is not updated for a predetermined period, then $V_{target}$ may be increased. This increases the possibility that a solution escapes from a local solution.

(Second Embodiment)

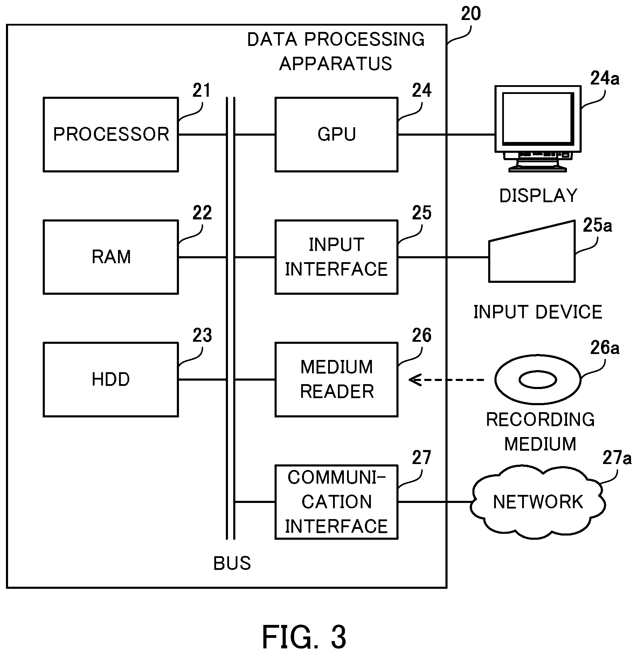

FIG. 3 is a block diagram illustrative of an example of hardware of a data processing apparatus according to a second embodiment.

A data processing apparatus 20 is, for example, a computer and includes a processor 21, a RAM 22, an HDD 23, a GPU 24, an input interface 25, a medium reader 26, and a communication interface 27. The above components are connected to a bus.

The processor 21 is a GPU, a CPU or the like including an arithmetic circuit that executes instructions of a program. The processor 21 loads at least a part of a program or data stored in the HDD 23 into the RAM 22 and executes the program. The processor 21 may include a plurality of processor cores. Furthermore, the data processing apparatus 20 may include a plurality of processors. A processor that executes a certain process among a plurality of processes executed by the data processing apparatus 20 may be different from a processor that executes a process different from the certain process among the plurality of processes. In addition, the processor may be referred to as processor circuitry. A set of a plurality of processors (multiprocessor) may be referred to as a "processor".

The RAM 22 is a volatile semiconductor memory that temporarily stores a program to be executed by the processor 21 and data to be used by the processor 21 for computation. The data processing apparatus 20 may include a memory of a kind other than the RAM 22 or may include a plurality of memories.

The HDD 23 is a non-volatile storage device that stores software programs, such as an operating system (OS), middleware, and application software, and data. The software programs include, for example, a program that causes the data processing apparatus 20 to execute a process for searching for a solution of a combinatorial optimization problem by a local search. The data processing apparatus 20 may include another kind of storage device, such as a flash memory or a solid state drive (SSD), or may include a plurality of nonvolatile storage devices.

The GPU 24 outputs an image to a display 24a connected to the data processing apparatus 20 in accordance with an instruction from the processor 21. A cathode ray tube (CRT) display, a liquid crystal display (LCD), a plasma display panel (PDP), an organic electro-luminescence (OEL) display, or the like is used as the display 24a.

The input interface 25 acquires an input signal from an input device 25a connected to the data processing apparatus 20 and outputs the input signal to the processor 21. A pointing device, such as a mouse, a touch panel, a touch pad, or a track ball, a keyboard, a remote controller, a button switch, or the like is used as the input device 25a. Furthermore, a plurality of kinds of input devices may be connected to the data processing apparatus 20.

The medium reader 26 is a reading device that reads a program and data recorded in a recording medium 26a. A magnetic disk, an optical disk, a magneto-optical disk (MO), a semiconductor memory, or the like is used as the recording medium 26a. The magnetic disk includes a flexible disk (FD) and an HDD. The optical disk includes a CD (Compact Disc) and a DVD (Digital Versatile Disc).

For example, the medium reader 26 copies a program or data read from the recording medium 26a to another recording medium such as the RAM 22 or the HDD 23. The read program is executed by, for example, the processor 21. The recording medium 26a may be a portable recording medium and may be used for distributing a program or data. Furthermore, the recording medium 26a or the HDD 23 may be referred to as a computer-readable recording medium.

The communication interface 27 is connected to a network 27a and communicates with another information processing apparatus via the network 27a. The communication interface 27 may be a wired communication interface connected to a communication device, such as a switch, via a cable, or may be a wireless communication interface connected to a base station via a wireless link.

The function of the data processing apparatus 20 will now be described.

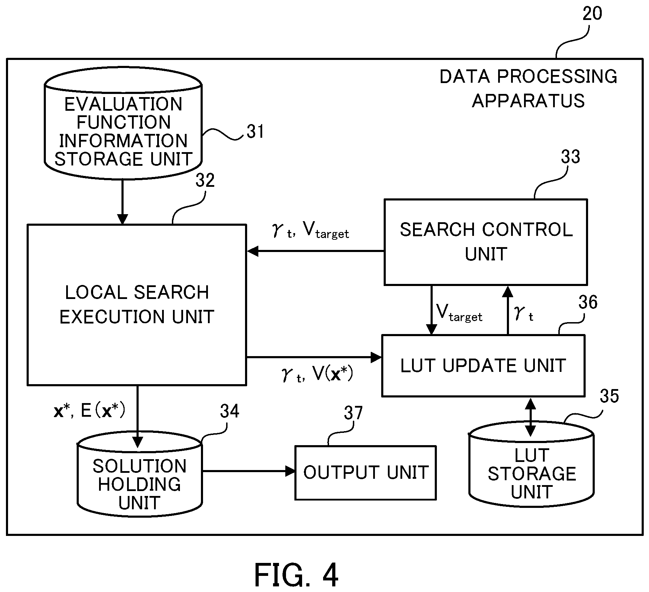

FIG. 4 is a block diagram illustrative of an example of the function of the data processing apparatus.

The data processing apparatus 20 includes an evaluation function information storage unit 31, a local search execution unit 32, a search control unit 33, a solution holding unit 34, an LUT storage unit 35, an LUT update unit 36, and an output unit 37.

The same functions that are carried out by the storage unit 11 and the processing unit 12 illustrated in FIG. 1 are realized by these unit.

The evaluation function information storage unit 31, the solution holding unit 34, and the LUT storage unit 35 are implemented by the use of a storage area ensured in the RAM 22 or the HDD 23. The local search execution unit 32, the search control unit 33, the LUT update unit 36, and the output unit 37 are implemented by the use of, for example, a program module executed by the processor 21 or a storage area (register or a cache memory) in the processor 21.

The evaluation function information storage unit 31 stores evaluation function information of a combinatorial optimization problem. The evaluation function information includes, for example, information of $C(x)$ in expression (1) (such as values of $W_{ij}$ and $b_i$ in expression (2)) and information of $V(x)$. The evaluation function information may be inputted by a user who operates the input device 25a and be stored in the evaluation function information storage unit 31. Furthermore, the evaluation function information may be inputted via the recording medium 26a or the network 27a and be stored in the evaluation function information storage unit 31.

The local search execution unit 32 searches for a solution of the combinatorial optimization problem by a local search. The steepest descent method, the greedy method, the tabu search method, the MCMC method, the rejection free method, the group descent method, or the like may be used as the local search.

Furthermore, the local search execution unit 32 calculates $E(x^*)$ and $V(x^*)$ corresponding to a solution candidate ($x^*$) of the combinatorial optimization problem obtained by the local search using a set value of $\gamma_t$. In addition, the local search execution unit 32 outputs $V(x^*)$ to the LUT update unit 36, together with the value of $\gamma_t$ used for the local search. Moreover, if $x^*$ is a constraint satisfaction solution ($V(x^*) = 0$), then the local search execution unit 32 outputs $x^*$ to the solution holding unit 34, together with $E(x^*)$. If there is one constraint condition, $E(x^*) = C(x^*)$ when $V(x^*) = 0$. Furthermore, the local search execution unit 32 has the function of changing a value of Yt.

The search control unit 33 controls the execution of the local search. Furthermore, the search control unit 33 has the function of setting $\gamma_t$ and $V_{target}$ in the local search execution unit 32. In addition, the search control unit 33 has the function of setting $V_{target}$ in the LUT update unit 36.

The solution holding unit 34 holds $x^*$ outputted by the local search execution unit 32, together with the value of $E(x^*)$.

The LUT storage unit 35 stores an LUT in which $V(x^*)$ for each value of $\gamma_t$ used for the local search is recorded.

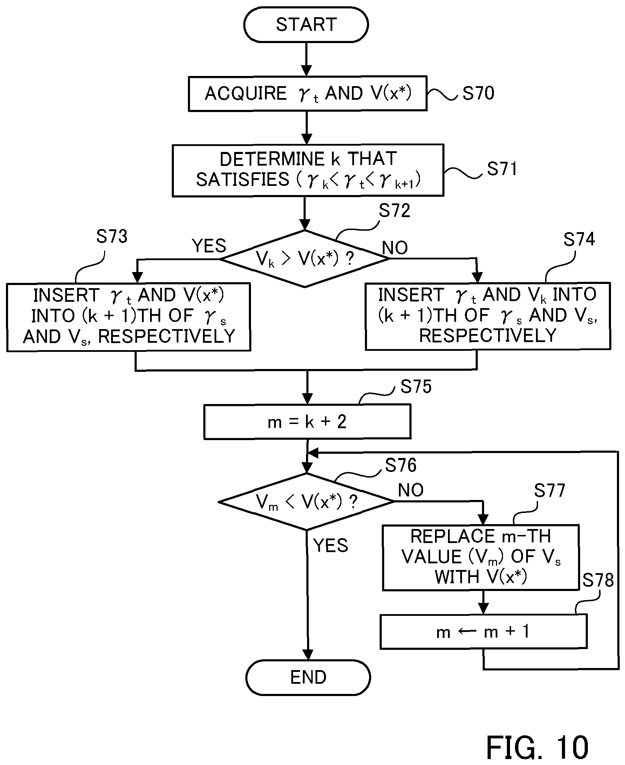

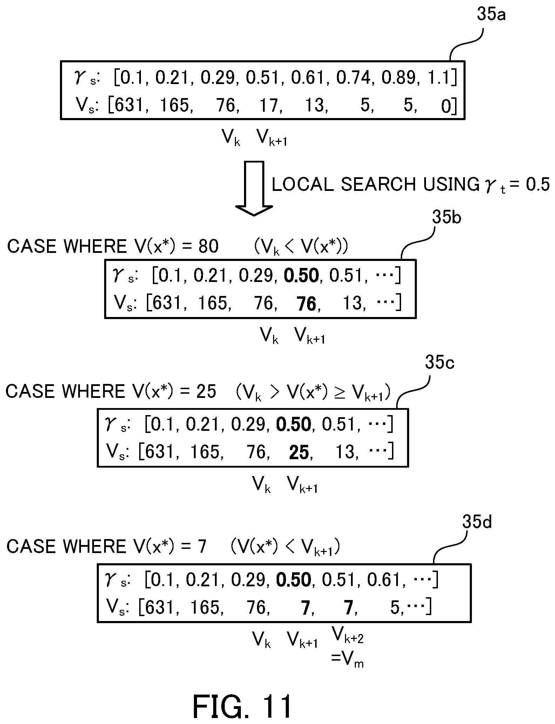

The LUT update unit 36 updates the LUT stored in the LUT storage unit 35. A specific example of updating the LUT will be described later (see FIGS. 10 and 11). Furthermore, the LUT update unit 36 refers to the LUT stored in the LUT storage unit 35 and outputs $\gamma_t$ for making $V(x^*)$ approach $V_{target}$.

If the LUT is not used for changing $\gamma_t$, then the LUT storage unit 35 and the LUT update unit 36 may be omitted.

For example, the output unit 37 outputs, as a search result, $x^*$ having the smallest $E(x^*)$ among $x^*$ held in the solution holding unit 34. The search result may include $E(x^*)$ corresponding to $x^*$. The outputted search result may include all $x^*$ and $E(x^*)$ held in the solution holding unit 34. For example, the output unit 37 may output and display the search result on the display 24a, may transmit the search result to another information processing device via the network 27a, or may store the search result in an external storage device.

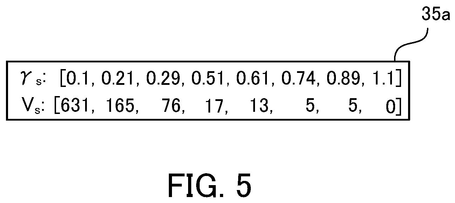

FIG. 5 illustrates an example of the LUT.

An LUT 35a illustrated in FIG. 5 includes an example of $\gamma_s$, which is an array of values of $\gamma_t$, and an example of $V_s$, which is an array of $V(x^*)$ for each value of $\gamma_t$. From the relationship between $V(x^*)$ and $\gamma_t$ illustrated in FIG. 2, $\gamma_s$ is arranged in ascending order and $V_s$ is arranged in descending order.

Three examples of a processing procedure by the data processing apparatus 20 will now be described.

(Processing Procedure (First Example))

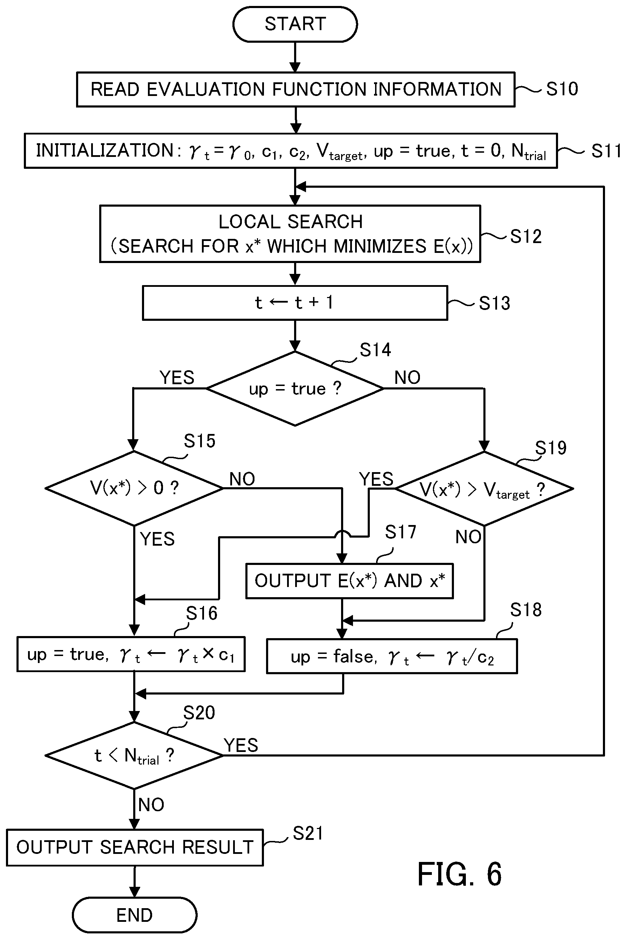

FIG. 6 is a flowchart illustrative of a first example of a processing procedure by the data processing apparatus.

In the first example, $\gamma_t$ is changed without using the LUT.

Step S10: The local search execution unit 32 reads evaluation function information stored in the evaluation function information storage unit 31.

Step S11: The search control unit 33 performs an initialization process. In the initialization process, $\gamma_t$ is initialized. A positive value, for example, $\gamma_0 = 0.1$, is used as an initial value ($\gamma_0$) of $\gamma_t$. Furthermore, $c_1$ and $c_2$, which are coefficients larger than 1 for changing a value of $\gamma_t$, and $V_{target}$ are set. $V_{target}$ is a positive value. $V_{target}$ may be inputted to the data processing apparatus 10 by, for example, a user who operates the input device 25a. In addition, "true" is set as "up" which is a flag indicating whether a state in which a value of $\gamma_t$ is increased exists. Moreover, t, which is a variable for counting the number of times a local search (step S12) is performed, is set to 0 and $N_{trial}$, which is a predetermined positive integer value, is set as a search termination condition.

Step S12: The local search execution unit 32 executes a local search based on the acquired evaluation function information in a state in which $\gamma_t$ is set to $\gamma_0$ or a value changed in steps S16 and S18 described later. In the local search, the search for x* that minimizes E(x) is performed. By the local search, a state in which a value of E(x) becomes the smallest becomes x* while the update of a state based on the change amount of a value of E(x) is repeated until a predetermined termination condition is satisfied. In step S12, the local search execution unit 32 also calculates E(x*) and V(x*) corresponding to x* which is a solution candidate obtained by the local search.

Step S13: The local search execution unit 32 updates t to t+1.

Step S14: The local search execution unit 32 determines whether "up" is "true." If the local search execution unit 32 determines that "up" is "true," then step S15 is performed. If the local search execution unit 32 determines that "up" is not "true," then step S19 is performed.

Step S15: The local search execution unit 32 determines whether the calculated V(x*) satisfies V(x*) > 0. If the local search execution unit 32 determines that V(x*) > 0, then the local search execution unit 32 performs step S16. If the local search execution unit 32 determines that V(x*) > 0 is not satisfied (that is to say, V(x*) = 0), then the local search execution unit 32 performs step S17.

Step S16: If "up" is "false," then the local search execution unit 32 changes "up" to "true" and increases $\gamma_t$ to $\gamma_t \times c_1$. After that, step S20 is performed.

Step S17: The local search execution unit 32 outputs a value of E(x*) and x* to the solution holding unit 34. The solution holding unit 34 holds the value of E(x*) and x*.

Step S18: If "up" is "true," then the local search execution unit 32 changes "up" to "false" and decreases $\gamma_t$ to $\gamma_t / c_2$. After that, step S20 is performed.

Step S19: The local search execution unit 32 determines whether the calculated V(x*) satisfies V(x*) > $V_{target}$. If the local search execution unit 32 determines that V(x*) > $V_{target}$, then the local search execution unit 32 performs step S16. If the local search execution unit 32 determines that V(x*) > $V_{target}$ is not satisfied, then the local search execution unit 32 performs step S18.

Step S20: The local search execution unit 32 determines whether t < $N_{trial}$. If the local search execution unit 32 determines that t < $N_{trial}$, then the local search execution unit 32 repeats the process from step S12. If the local search execution unit 32 determines that t < $N_{trial}$ is not satisfied, then step S21 is performed.

Step S21: The output unit 37 outputs a search result (for example, x* having the smallest value of E(x*) among x* held in the solution holding unit 34). As a result, the process ends.

As has been described, in the processing procedure of the first example, the data processing apparatus 20 increases a value of $\gamma_t$ by multiplying $\gamma_t$ by $c_1$ until a solution candidate (x*) satisfying the constraint condition (V(x*) = 0) is obtained in a local search. Furthermore, after x* satisfying the constraint condition is obtained, the data processing apparatus 20 divides $\gamma_t$ by $c_2$ to decrease a value of $\gamma_t$ until V(x*) reaches $V_{target}$. In the processing procedure of the first example, a value of $\gamma_t$ is changed by the above process in a direction in which a value of V(x*) approaches $V_{target}$.

As a result, the possibility that a solution escapes from a local solution is increased and the search efficiency of a solution of a combinatorial optimization problem including a constraint condition is improved, compared with the method in which a value of $\gamma_t$ is simply decreased if V(x*) = 0 and in which a value of $\gamma_t$ is simply increased if V(x*) > 0.

(Processing Procedure (Second Example))

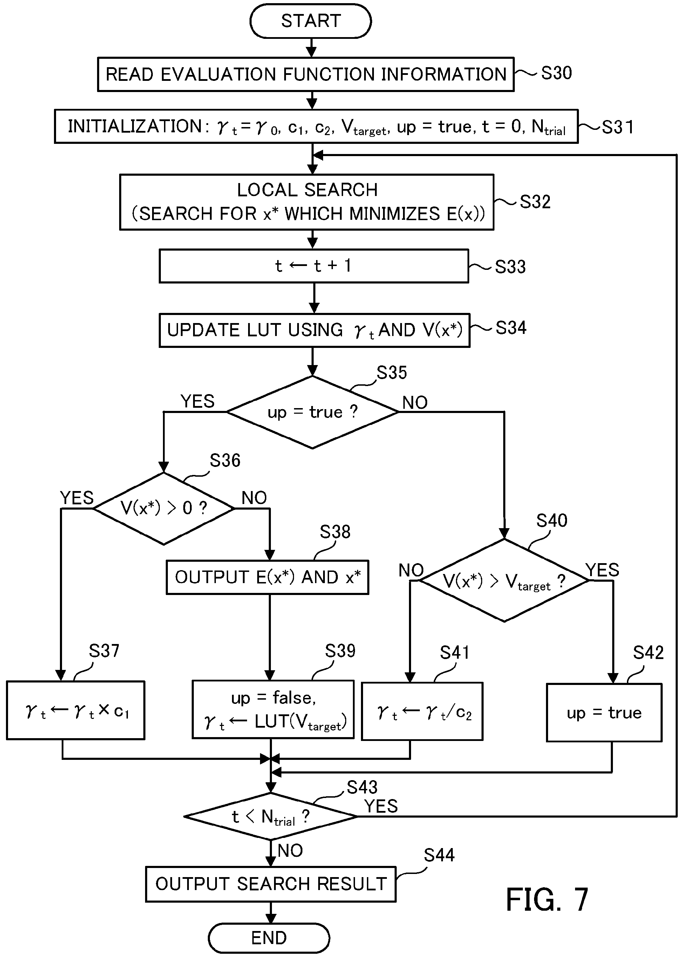

FIG. 7 is a flowchart illustrative of a second example of a processing procedure by the data processing apparatus.

In the second example, $\gamma_t$ is changed using the LUT.

Steps S30 to S33 are the same as steps S10 to S13, respectively, in FIG. 6.

Step S34: The LUT update unit 36 updates the LUT by the use of a value of $\gamma_t$ and V(x*) used in the local search in step S32. An example of an LUT update process will be described later (see FIGS. 10 and 11).

Steps S35 and S36 are the same as steps S14 and S15, respectively, in FIG. 6.

Step S37: The local search execution unit 32 increases $\gamma_t$ to $\gamma_t \times c_1$. After that, step S43 is performed.

Step S38 is the same as step S17 in FIG. 6.

Step S39: The local search execution unit 32 changes "up" to "false." Furthermore, the LUT update unit 36 refers to the LUT stored in the LUT storage unit 35 and outputs $\gamma_t$ for making $V(x^*)$ approach to $V_{target}$. In FIG. 7, this is indicated by $\gamma_t \leftarrow LUT(V_{target})$.

For example, if $V_{target}$ is $V_s = 17$ recorded in the LUT 35a of FIG. 5, then the LUT update unit 36 outputs $\gamma_s = 0.51$ corresponding to the value as a value of $\gamma_t$ after a change. If $V_{target}$ does not correspond to a value of $V_s$ recorded in the LUT 35a of FIG. 5, then, for example, the LUT update unit 36 determines a value of $\gamma_t$ after a change in the following way.

It is assumed that a first value and a second value adjacent to $V(x^*)$ are recorded in an LUT and that $V_{target}$ is larger than the first value and smaller than the second value. In this case, the LUT update unit 36 determines a value of $\gamma_t$ after a change corresponding to $V_{target}$ by performing linear interpolation between a value of $\gamma t$ corresponding to the first value and a value of $\gamma_t$ corresponding to the second value.

After step S39, step S43 is performed.

Step S40 is the same as step S19 in FIG. 6.

Step S41: If it is determined that $V(x^*) > V_{target}$ is not satisfied, then the local search execution unit 32 decreases $\gamma_t$ to $\gamma_t/c_2$. In step S41, after $\gamma_t$ is changed using the LUT, a fine adjustment is performed by $c_2$. By doing so, $V(x^*)$ approaches $V_{target}$ further.

After step S41, step S43 is performed.

Step S42: If it is determined that $V(x^*) > V_{target}$, then the local search execution unit 32 changes "up" to "true" and proceeds to step S43.

Steps S43 and S44 are the same as steps S20 and S21, respectively, in FIG. 6.

As has been described, in the processing procedure of the second example, the data processing apparatus 20 stores the LUT in which $V(x^*)$ for each value of $\gamma_t$ is recorded in the LUT storage unit 35. In a local search, the data processing apparatus 20 increases a value of $\gamma_t$ by multiplying $\gamma_t$ by $c_1$ until a solution candidate ($x^*$) satisfying the constraint condition ($V(x^*) = 0$) is obtained. Furthermore, after $x^*$ satisfying the constraint condition is obtained, the data processing apparatus 20 determines, based on the LUT, a value of $\gamma_t$ that makes a value of $V(x)$ approach $V_{target}$. In the processing procedure of the second example, a value of $\gamma_t$ is changed by the above process in a direction in which a value of $V(x)$ approaches $V_{target}$.

As a result, the possibility that a solution escapes from a local solution is increased and the search efficiency of a solution of a combinatorial optimization problem including a constraint condition is improved, compared with the method in which a value of $\gamma_t$ is simply decreased if $V(x) = 0$ and in which a value of $\gamma_t$ is simply increased if $V(x) > 0$. In addition, the possibility that a solution escapes from a local solution fast, compared with the processing procedure of the first example, is increased and the search efficiency of a solution of a combinatorial optimization problem including a constraint condition is further improved.

(Processing Procedure (Third Example))

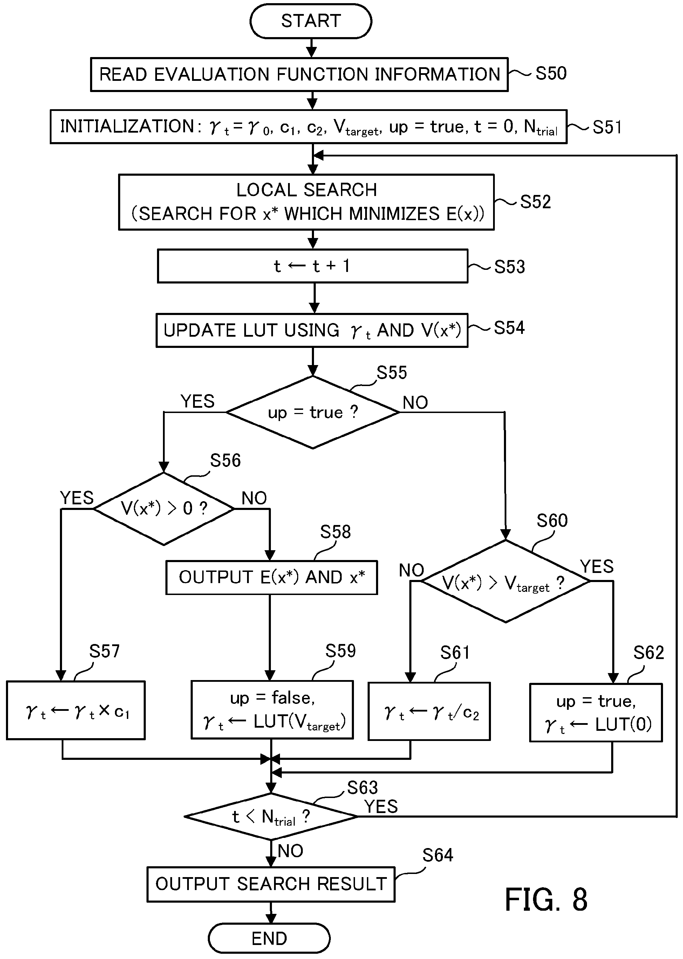

FIG. 8 is a flowchart illustrative of a third example of a processing procedure by the data processing apparatus.

In the third example, $\gamma_t$ is also changed by the use of the LUT. Steps S50 to S61 are the same as steps S30 to S41, respectively, in the second example.

Step S62: If it is determined that $V(x^*) > V_{target}$, then the local search execution unit 32 changes "up" to "true." Furthermore, the LUT update unit 36 refers to the LUT stored in the LUT storage unit 35 and outputs $\gamma_t$ for making $V(x^*)$ approach 0. In FIG. 8, this is indicated by $\gamma_t \leftarrow LUT(0)$.

For example, the LUT update unit 36 detects $V_i$ and $V_{i+1}$ satisfying $V_i > 0 = V_{i+1}$ from the LUT. $V_i$ and $V_{i+1}$ are the i-th and (i+1)th $V(x^*)$ stored in the LUT. Furthermore, the LUT update unit 36 performs linear interpolation between a value of $\gamma_t$ corresponding to $V_i$ and a value of $\gamma_t$ corresponding to $V_{i+1}$ to determine a value of $\gamma_t$ after a change for making $V(x^*)$ approach 0. By doing so, a value of $\gamma_t$ quickly approaches $\gamma^*$ that is the boundary between a constraint satisfaction state ($V(x^*) = 0$) and a constraint violation state ($V(x^*) > 0$).

After step S62, step S63 is performed.

Steps S63 and S64 are the same as steps S20 and S21, respectively, in FIG. 6.

As has been described, according to the processing procedure of the third example, the LUT is used even when a value of $\gamma_t$ is increased. By doing so, a value of $\gamma_t$ is increased efficiently compared with the processing procedure of the second example. As a result, the search efficiency of a solution is further improved.

(Example of LUT Update Process)

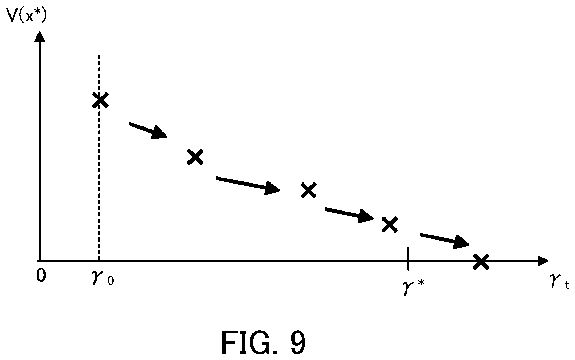

FIG. 9 illustrates an example of a change in $V(x^*)$ with respect to a change in $\gamma_t$.

As illustrated in FIG. 9, if the processing procedures of the first to third examples are executed, a value of $\gamma_t$ increases from $\gamma_0$ until V(x*) reaches 0. $\gamma^*$ illustrated in FIG. 9 is a value (unknown value) of $\gamma_t$ that is the boundary between the constraint satisfaction state (V(x*) = 0) and the constraint violation state (V(x*) > 0).

If the LUT is used as in the second and third examples, V(x*) obtained by a local search using each value of $\gamma_t$ changed as illustrated in FIG. 9 is recorded in the LUT. As a result, for example, the LUT 35a illustrated in FIG. 5 is obtained. After that, the LUT is updated in accordance with the following procedure.

FIG. 10 is a flowchart illustrative of a procedure for an example of an LUT update process.

Step S70: The LUT update unit 36 acquires a new value of $\gamma_t$ and a new V(x*) corresponding thereto from the local search execution unit 32.

Step S71: The LUT update unit 36 refers to the LUT stored in the LUT storage unit 35 and determines k that satisfies $\gamma_k < Yt < \gamma_{k+1}$ for the value of $\gamma_t$ acquired this time. k is an identification number (index) representing k-th elements of $\gamma_s$, which is an array of values of $\gamma_t$, and $V_s$, which is an array of V(x*), in the LUT.

Step S72: The LUT update unit 36 determines whether V(x*) acquired this time is smaller than $V_k$ which is the k-th value of $V_s$. If the LUT update unit 36 determines that V(x*) is smaller than $V_k$, then step S73 is performed. If the LUT update unit 36 determines that V(x*) is not smaller than $V_k$, then step S74 is performed.

Step S73: The LUT update unit 36 inserts the value of $\gamma_t$ and V(x*) acquired this time into the (k+1)th of $\gamma_s$ and $V_s$ respectively. After that, step S75 is performed.

Step S74: The LUT update unit 36 inserts the value of $\gamma_t$ acquired this time and $V_k$ into the (k+1)th of $\gamma_s$ and $V_s$ respectively. After that, step S75 is performed.

Step S75: The LUT update unit 36 sets m, which is an identification number (index) representing the m-th element of $\gamma_s$ and $V_s$, to m = k+2.

Step S76: The LUT update unit 36 determines whether V(x*) acquired this time is larger than $V_m$. If the LUT update unit 36 determines that V(x*) is larger than $V_m$, then the LUT update unit 36 ends the LUT update process. If the LUT update unit 36 determines that V(x*) is not larger than $V_m$, then the LUT update unit 36 performs step S77.

Step S77: The LUT update unit 36 replaces the m-th value ($V_m$) of $V_s$ with V(x*).

Step S78: The LUT update unit 36 increments a value of m by 1. After that, the LUT update unit 36 repeats the process from step S76.

The LUT is updated in accordance with the above procedure.

FIG. 11 illustrates an example of updating the LUT. FIG. 11 illustrates an update example corresponding to V(x*) obtained as a result of a local search using $\gamma_t = 0.5$ in a state in which the LUT 35a is obtained. If $\gamma_t = 0.5$, $V_k$ used in step S72 illustrated in FIG. 10 is $V_k = 76$.

If $V_k < V(x^*)$ (if V(x*) = 80 in the example of FIG. 11), then step S74 is performed. As a result, as in an LUT 35b, $\gamma_t = 0.5$ and $V_k = 76$ are inserted into the (k+1)th of $\gamma_s$ and $V_s$ respectively.

If $V_k > V(x^*) \geq V_{k+1}$ (if V(x*) = 25 in the example of FIG. 11), then step S73 is performed. $\gamma_t = 0.5$ and V(x*) = 25 are inserted into the (k+1)th of $\gamma_s$ and $V_s$ respectively as in an LUT 35c.

If $V(x^*) < V_{k+1}$ (if V(x*) = 7 in the example of FIG. 11), step S73 is also performed. $\gamma_t = 0.5$ and V(x*) = 7 are inserted into the (k+1)th of $\gamma_s$ and $V_s$ respectively. By this insertion, $V_m = V_{k+2} = 17$ and $V_m < V(x^*)$ is not satisfied. Accordingly, step S77 is performed and $V_m = 17$ is replaced with V(x*) = 7. As a result, an LUT 35d is obtained after update.

By updating the LUT in the above way, an LUT reflecting the search situation of a local search is obtained. By determining a value of $\gamma_t$ after a change using such an LUT, V(x*) is made to approach $V_{target}$ more quickly. As a result, search efficiency is further improved.


(Modification 1)


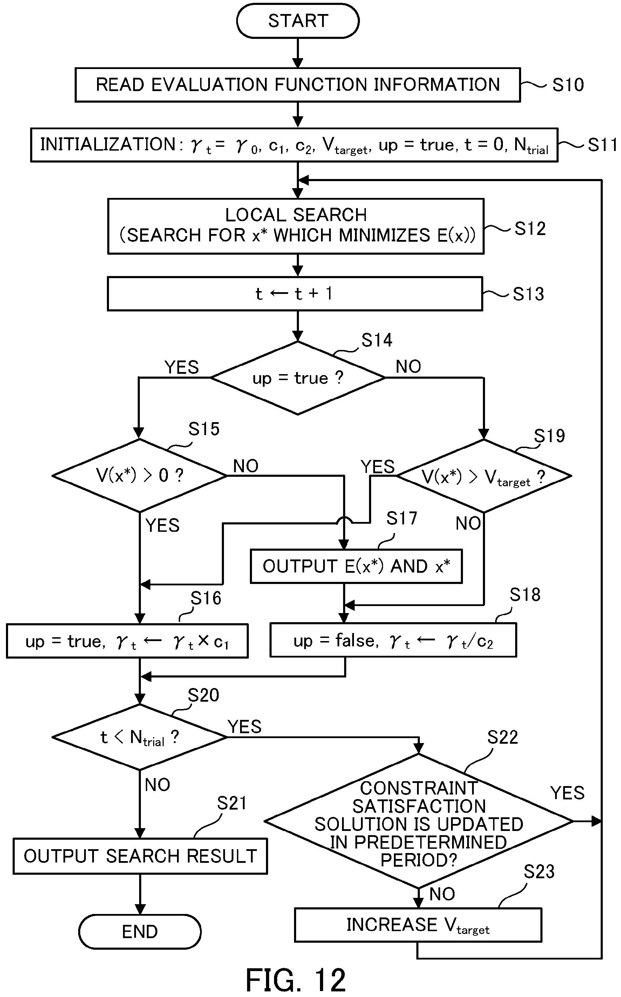

FIG. 12 is a flowchart illustrative of a processing procedure according to modification 1. FIG. 12 illustrates a modification of the processing procedure of the first example illustrated in FIG. 6.

If the local search execution unit 32 determines in step S20 that $t < N_{trial}$, then step S22 is performed.

Step S22: The search control unit 33 determines whether a constraint satisfaction solution is updated within a predetermined period. If x* satisfying V(x*) = 0 is updated within the predetermined period, then the search control unit 33 determines that the constraint satisfaction solution is updated. The predetermined period may be, for example, a period corresponding to a predetermined number of cycles, where one cycle is defined as a period from the time when x* at which V(x*) = 0 is obtained to the time when a value of $\gamma_t$ is decreased to reach $V_{target}$.

If the search control unit 33 determines that the constraint satisfaction solution is updated within the predetermined period, then the process from step S12 is repeated. If the search control unit 33 determines that the constraint satisfaction solution is not updated within the predetermined period, then step S23 is performed.

Step S23: The search control unit 33 increases $V_{target}$. An initial value of $V_{target}$ is a small positive value. For example, the search control unit 33 increases $V_{target}$ by multiplying $V_{target}$ by $C_3$ which is a coefficient larger than 1. After that, the process from step S12 is repeated.

$N_{trial}$ may be used as the predetermined period. In this case, if the local search execution unit 32 determines in step S20 that $t < N_{trial}$ is not satisfied (if t reaches $N_{trial}$), then the search control unit 33 determines whether the constraint satisfaction solution is updated. The search control unit 33 may perform step S23 if the search control unit 33 determines that the constraint satisfaction solution is not updated. The search control unit 33 may perform step S21 if the search control unit 33 determines that the constraint satisfaction solution is updated.

As has been described, if the constraint satisfaction solution is not updated within the predetermined period, the possibility that a solution escapes from a local solution increases by increasing $V_{target}$. That is to say, it is expected that the number of useless searches in which a solution is not updated decreases and that a constraint satisfaction solution is obtained in a short time.

In the above description, an example in which the process of increasing $V_{target}$ is applied to the processing procedure of the first example illustrated in FIG. 6 is given. However, the process of increasing $V_{target}$ may also be applied to the processing procedures of the second and third examples.

(Modification 2)

In the processing procedures of the second and third examples described above, the LUT update unit 36 determines a value of $\gamma_t$ that makes V(x*) approach $V_{target}$ by the use of the LUT. However, a value of $\gamma_t$ that makes V(x*) approach $V_{target}$ may be determined based on a relational expression between $\gamma_t$ and V(x*).

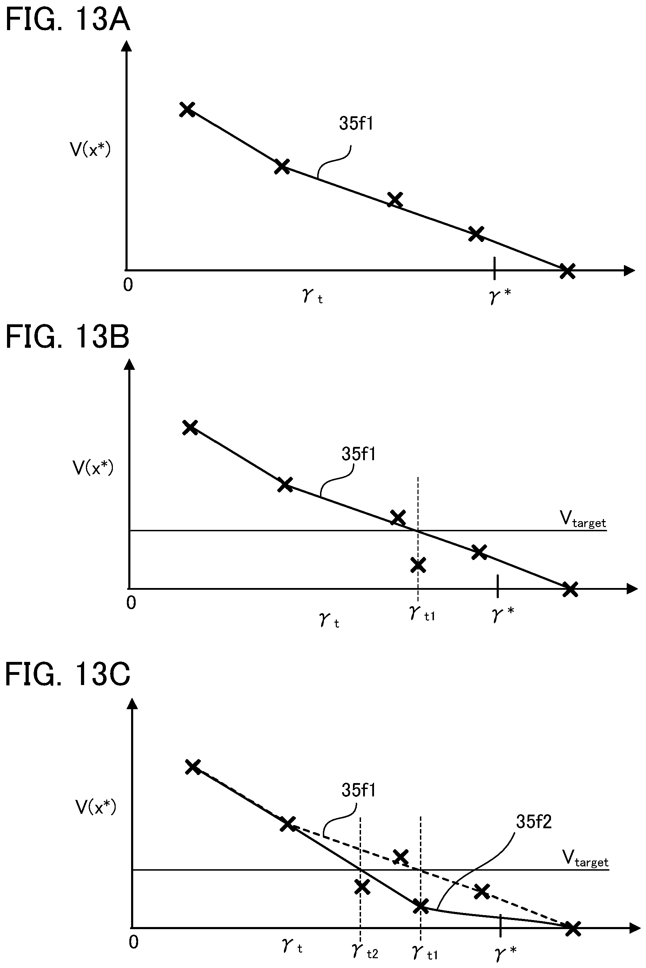

FIGS. 13A to 13C illustrate an example of determining a value of $\gamma_t$ based on a relational expression between $\gamma_t$ and V (x*) .

When V(x*) corresponding to each value of $\gamma_t$ is obtained as illustrated in FIG. 9, the LUT update unit 36 determines a relational expression 35f1 between $\gamma_t$ and V(x*), as illustrated in FIG. 13A, using these values. The relational expression 35f1 is determined, for example, by using the convexity of a function. When $V_{target}$ is given, the LUT update unit 36 calculates $\gamma_{t1}$, which is a value of $\gamma_t$ corresponding to $V_{target}$, from the relational expression 35f1 (FIG. 13B). Furthermore, the relational expression 35f1 is updated using V(x*) obtained by a local search performed using $\gamma_{t1}$.

FIG. 13C illustrates a relational expression 35f2 after update. After that, $\gamma_{t2}$ which is a value of $\gamma_t$ corresponding to $V_{target}$ is calculated from the relational expression 35f2. In addition, the relational expression 35f2 is updated using V(x*) obtained by a local search performed using $\gamma_{t2}$. The above process is repeated.

As has been described, by updating a relational expression between $\gamma_t$ and V(x*), a relational expression reflecting the search situation of a local search is obtained. By determining a value of $\gamma_t$ after a change using such a relational expression, V(x*) is made to approach $V_{target}$ more quickly.

(Modification 3)

The processing procedures of the first to third examples may be executed in parallel using a plurality of states (replicas). This method of obtaining a candidate for a new solution or an initial state of the next search from a plurality of minimum values obtained by a plurality of local searches may also be referred to as the group descent method. The execution of the processing procedures of the first to third examples in parallel using a plurality of states (replicas) may be combined with the group descent method. For example, different initial states are used for the respective replicas and a common value is used for $\gamma_t$ in all the replicas. When the LUT is updated in the processing procedures of the second and third examples, an average value of V(x*) obtained in all the replicas, for example, may be used as V(x*) for common $\gamma_t$.

By performing a local search using a plurality of replicas, a solution having a smaller value of E(x) is searched for at a high speed.

(Modification 4)

There may be a plurality of constraint conditions. For example, if there are two constraint conditions, E(x) is expressed by the following expression (3).

$$E(\boldsymbol{x}) = C(\boldsymbol{x}) + \gamma_{1t} V_1(\boldsymbol{x}) + \gamma_{2t} V_2(\boldsymbol{x}) \tag{3}$$

where $V_1(x)$ is a first constraint function regarding a first constraint condition, $V_2(x)$ is a second constraint function regarding a second constraint condition, $\gamma_{1t}$ is a first constraint coefficient representing the weight of the first constraint condition, and $\gamma_{2t}$ is a second constraint coefficient representing the weight of the second constraint condition.

If a plurality of constraint functions are used, then $V_{target}$ may be set for each constraint function. As described above, the two constraint functions ($V_1(x)$ and $V_2(x)$) are used. Accordingly, $V_{target1}$ is set for $V_1(x)$ and $V_{target2}$ is set for $V_2(x)$.

Furthermore, for each constraint condition, an LUT is created and updated or a relational expression between $\gamma_{1t}$ and $V_1(x)$ and a relational expression between $\gamma_{2t}$ and $V_2(x)$ are calculated and updated.

It is assumed that values of $\gamma_{1t}$ and $\gamma_{2t}$ are changed (increased) from appropriate initial values, and that $V_1(x) = 0$ and $V_2(x) > 0$ are satisfied by values of $\gamma_{1t}$ and $\gamma_{2t}$ at a certain time t. In this case, in the following process, the value of $\gamma_{1t}$ is fixed and the value of $\gamma_{2t}$ is increased.

When $V_1(x) = 0$ and $V_2(x) = 0$, the values of $\gamma_{1t}$ and $\gamma_{2t}$ are decreased by the processing procedures of the first to third examples. It is assumed that $V(x)$, which is one of $V_1(x)$ and $V_2(x)$, satisfies $V(x) > V_{target}$ when the values of $\gamma_{1t}$ and $\gamma_{2t}$ are decreased. In this case, a value of $\gamma_t$ (one of $\gamma_{1t}$ or $\gamma_{2t}$) corresponding to $V(x)$ is fixed until the other of $V_1(x)$ and $V_2(x)$ becomes larger than $V_{target}$.

In another example, $\gamma_{1t}$ is fixed at a value at which $V_1(x) = 0$ is obtained, and a value of $\gamma_{2t}$ is increased or decreased to search for a solution. After that, $\gamma_{2t}$ is fixed at a value at which $V_2(x) = 0$ is obtained, and a value of $\gamma_{1t}$ is increased or decreased to search for a solution. The above process may be repeated.

The order of the processes illustrated in FIGS. 6 to 8, 12, and 14 is an example, and the order of the processes may be properly changed.

Furthermore, a processing procedure in each of the above examples and the contents of a process in each of the above modification are realized by causing the data processing apparatus 20 to execute a program. The program is recorded in a computer-readable recording medium (for example, the recording medium 26a). A magnetic disk, an optical disk, a magneto-optical disk, a semiconductor memory, or the like may be used as the recording medium. The magnetic disk includes an FD or an HDD. The optical disk includes a CD, a CD-recordable/rewritable (CD-R/RW), a DVD, or a DVD-R/RW. The program may be recorded in a portable recording medium and be distributed. In this case, the program may be copied from the portable recording medium to another recording medium (for example, the HDD 23) and be executed.

(Processing Procedure Taken as Comparative Example)

A processing procedure taken as a comparative example with respect to the processing procedures of the first to third examples will now be described.

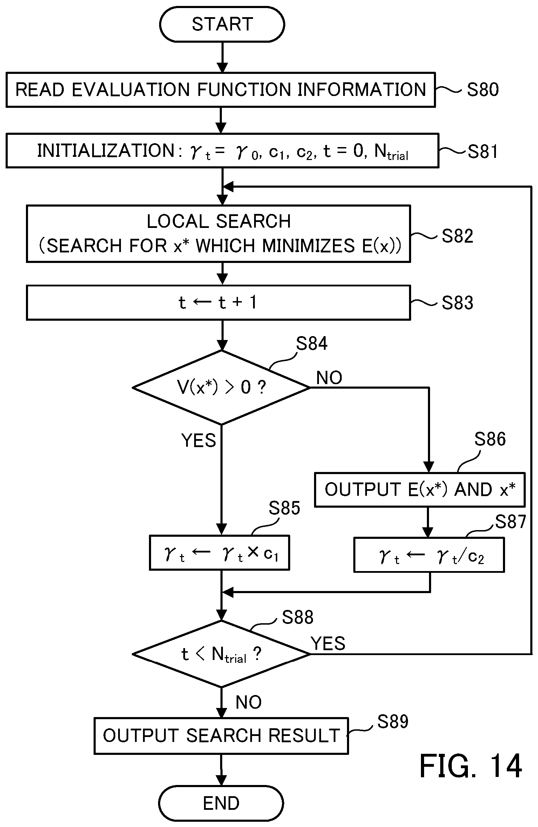

FIG. 14 is a flowchart illustrative of a processing procedure taken as the comparative example.

Step S80: The local search execution unit 32 reads the evaluation function information stored in the evaluation function information storage unit 31.

Step S81: The search control unit 33 performs an initialization process. In the initialization process, $\gamma_t$ is initialized to $\gamma_0$. Furthermore, $c_1$ and $c_2$, which are coefficients larger than 1 for changing a value of $\gamma_t$, are set. In addition, t, which is a variable, is set to 0 and $N_{trial}$ is set.

Step S82: The local search execution unit 32 executes a local search based on the acquired evaluation function information in a state in which $\gamma_t$ is set to $\gamma_0$ or a value changed in steps S85 and S87 described later. In the local search, a search for x* that minimizes $E(x)$ is performed. By the local search, a state in which a value of $E(x)$ becomes the smallest becomes x* while the update of a state based on the change amount of a value of $E(x)$ is repeated until a predetermined termination condition is satisfied. In step S82, the local search execution unit 32 also calculates $E(x^*)$ and $V(x^*)$ corresponding to x* which is a solution candidate obtained by the local search.

Step S83: The local search execution unit 32 updates t to t+1.

Step S84: The local search execution unit 32 determines whether the calculated $V(x^*)$ satisfies $V(x^*) > 0$. If the local search execution unit 32 determines that $V(x^*) > 0$, then the local search execution unit 32 performs step S85. If the local search execution unit 32 determines that $V(x^*) > 0$ is not satisfied (that is to say, $V(x^*) = 0$), the local search execution unit 32 performs step S86.

Step S85: The local search execution unit 32 increases $\gamma_t$ to $\gamma_t \times c_1$. After that, step S88 is performed.

Step S86: The local search execution unit 32 outputs a value of $E(x^*)$ and x* to the solution holding unit 34. The solution holding unit 34 holds the value of $E(x^*)$ and x*.

Step S87: The local search execution unit 32 decreases $\gamma_t$ to $\gamma_t/c_2$. After that, step S88 is performed.

Step S88: The local search execution unit 32 determines whether $t < N_{trial}$. If the local search execution unit 32 determines that $t < N_{trial}$, then the local search execution unit 32 repeats the process from step S82. If the local search execution unit 32 determines that $t < N_{trial}$ is not satisfied, then step S89 is performed.

Step S89: The output unit 37 outputs a search result (for example, x* having the smallest value of $E(x^*)$ among x* held in the solution holding unit 34). As a result, the process ends.

With the above processing procedure taken as a comparative example, a value of $\gamma_t$ is decreased if $V(x^*) = 0$. A value of $\gamma_t$ is increased if $V(x^*) > 0$.

The following describes an example of an evaluation experiment performed to compare effects obtained in a case where the processing procedure taken as a comparative example is executed and a case where the processing procedures of the first to third examples according to the second embodiment are executed.

(Example of Evaluation Experiment)

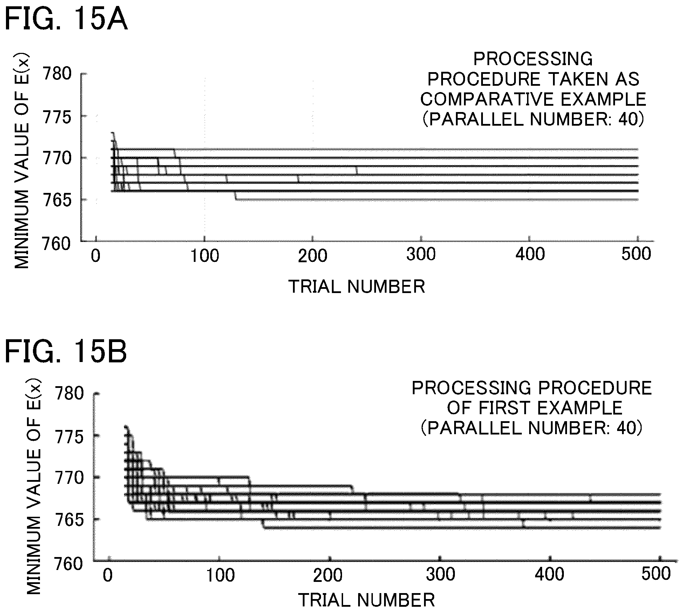

FIGS. 15A and 15B illustrate examples of numerical experiment results obtained in a case where the processing procedure taken as a comparative example and the processing procedure of the first example are applied. FIG. 15A illustrates a numerical experiment result obtained in a case where the processing procedure taken as a comparative example is applied. FIG. 15B illustrates a numerical experiment result obtained in a case where the processing procedure of the first example is applied. In each of FIGS. 15A and 15B, a vertical axis indicates the minimum value of $E(x)$, and a horizontal axis indicates the number of trials. In the example of the experiment, a change (bit inversion) in the value of the state variable included in $E(x)$ made $3N$ times by a local search is set as one trial.

A problem to be computed is the minimum vertex covering problem on a random graph according to the Erdő s-Rényi model. The number of vertices is 1024 and the average degree is 15. A local search is performed by the Tabu search. Values of $c_1$ and $c_2$, which are coefficients used for changing a value of $\gamma_t$, are set to $c_1 = 1.2$ and $c_2 = 1.3$. $V_{target}$ is 20. Both of the processing procedures are executed in parallel using a plurality of replicas described in modification 3. A parallel number is 40.

As illustrated in FIG. 15A, if the processing procedure taken as a comparative example is applied, a situation in which the minimum value of $E(x)$ is not updated due to constraint by a local solution as a result of several tens of trials is observed. On the other hand, as illustrated in FIG. 15B, if the processing procedure of the first example is applied, the number of updates of the minimum value of $E(x)$ increases and a smaller minimum value is found.

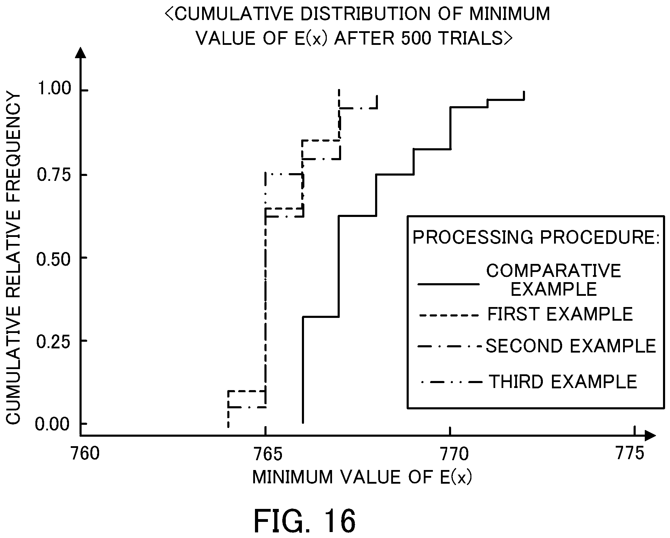

FIG. 16 illustrates an example of the cumulative distribution of the minimum value of $E(x)$ obtained if the processing procedure taken as a comparative example and the processing procedures of the first to third examples are applied. FIG. 16 illustrates an example of the cumulative distribution of the minimum value obtained after 500 trials. In FIG. 16, a vertical axis indicates cumulative relative frequency and a horizontal axis indicates the minimum value of $E(x)$.

As illustrated in FIG. 16, if the processing procedures of the first to third examples are applied, a small minimum value of $E(x)$ is obtained compared with a case where the processing procedure taken as a comparative example is applied.

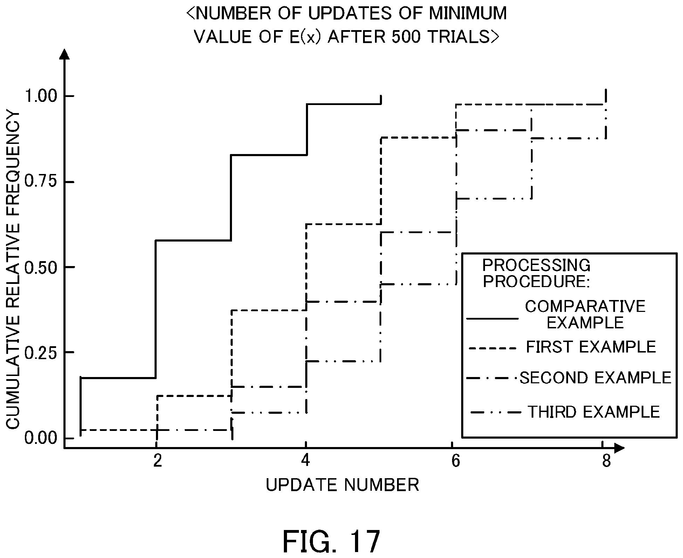

FIG. 17 illustrates an example of the number of updates of the minimum value of $E(x)$ obtained if the processing procedure taken as a comparative example and the processing procedures of the first to third examples are applied. In FIG. 17, a vertical axis indicates cumulative relative frequency and a horizontal axis indicates the number of updates.

As illustrated in FIG. 17, if the processing procedures of the first to third examples are applied, the number of updates of the minimum value of $E(x)$ increases compared with a case where the processing procedure taken as a comparative example is applied. If the processing procedures of the second example and the third example using the LUT are applied, the number of updates is large compared with a case where the processing procedure of the first example is applied. Furthermore, if the processing procedure of the third example is applied, the number of updates is large compared with a case where the processing procedure of the second example is applied.

Therefore, it is expected that when a solution to a large-scale problem is searched for, the processing procedures of the second example and the third example using the LUT have the effect of improving search efficiency compared with the processing procedure of the first example.

(Another Example of Data Processing Apparatus)

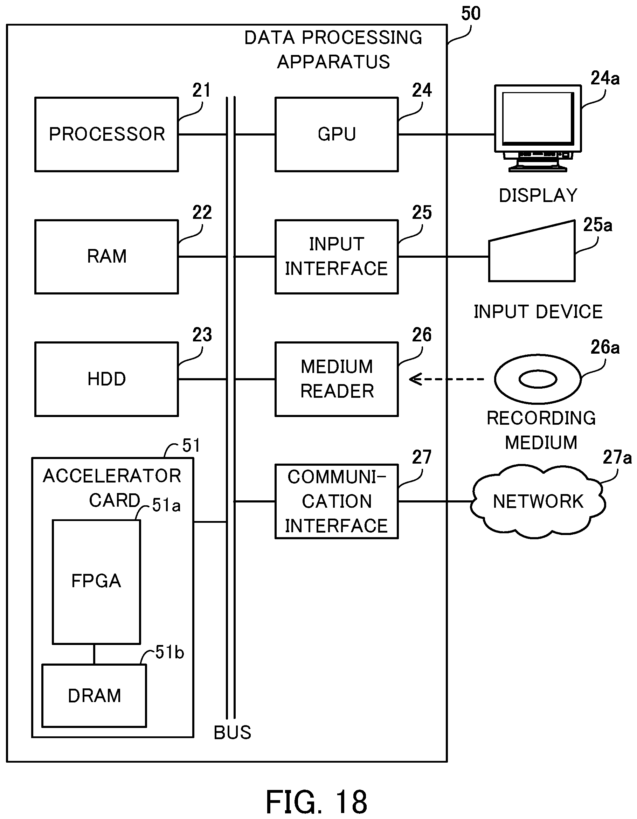

FIG. 18 illustrates another example of a data processing apparatus. Components in FIG. 18 which are the same as those illustrated in FIG. 3 are marked with the same reference numerals.

A data processing apparatus 50 includes an accelerator card 51 connected to a bus.

The accelerator card 51 is a hardware accelerator that searches for a solution to a combinatorial optimization problem. The accelerator card 51 includes an FPGA 51a and a DRAM 51b.

With the data processing apparatus 50, the FPGA 51a and the DRAM 51b perform processes by, for example, the processing unit 12 and the storage unit 11 illustrated in FIG. 1 or each unit illustrated in FIG. 4. In this case, the processing unit 12 and the storage unit 11 illustrated in FIG. 1 or each unit illustrated in FIG. 4 is realized by various circuits constructed in the FPGA 51a, a memory in the FPGA 51a, or the DRAM 51b. The accelerator card 51 may be included in plurality.

One aspect of each of the computer program, the data processing apparatus, and the data processing method of the present invention has been described above based on the embodiments. However, it is simply an example and the present invention is not limited to the above description.

According to an aspect, the search efficiency of a solution to a combinatorial optimization problem including a constraint condition is improved.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

**Claims**

1. A computer program that causes a computer to perform a process comprising:

   acquiring, from storage means (11), evaluation function information of an evaluation function of a combinatorial optimization problem, the evaluation function including a sum of an objective function and one or more constraint functions including a first constraint function weighted by a first coefficient representing a weight of a first constraint condition; and

   changing, in a course of repeatedly executing a local search for searching for a solution candidate of the combinatorial optimization problem using the evaluation function information while changing a value of the first coefficient, the value of the first coefficient in a direction in which a value of the first constraint function corresponding to the solution candidate obtained by the local search using each value of the first coefficient approaches a target value which is a positive value.

2. The computer program according to claim 1, wherein the process further includes:

   increasing, in the local search, the value of the first coefficient until the solution candidate satisfying the first constraint condition is obtained; and

   decreasing, in the local search, the value of the first coefficient until a value of the first constraint function reaches the target value after the solution candidate satisfying the first constraint condition is obtained.

3. The computer program according to claim 1 or 2, wherein the process further includes:

   storing, in the storage means, table information in which a value of the first constraint function for each value of the first coefficient is recorded; and

   determine, based on the table information, the value of the first coefficient that makes the value of the first constraint function approach the target value.

4. The computer program according to claim 3, wherein the process further includes updating the table information each time a new value of the first coefficient and a new value of the first constraint function are obtained.

5. The computer program according to claim 1 or 2, wherein the process further includes:

   determining a relational expression representing a relationship between the value of the first coefficient and the value of the first constraint function based on the value of the first constraint function for each value of the first coefficient; and

   determining, based on the relational expression, the value of the first coefficient that makes the value of the first constraint function approach the target value.

6. The computer program according to claim 5, wherein the process further includes updating the relational expression each time a new value of the first coefficient and a new value of the first constraint function are obtained.

7. The computer program according to any of the preceding claims, wherein the process further includes increasing the target value upon determining that the solution candidate satisfying the first constraint condition is not updated within a predetermined period.

8. A data processing apparatus comprising:

   storage means (11) for storing evaluation function information of an evaluation function of a combinatorial optimization problem, the evaluation function including a sum of an objective function and one or more constraint functions including a first constraint function weighted by a first coefficient representing a weight of a first constraint condition; and

processing means (12) for acquiring the evaluation function information from the storage means and for changing, in a course of repeatedly executing a local search for searching for a solution candidate of the combinatorial optimization problem using the evaluation function information while changing a value of the first coefficient, the value of the first coefficient in a direction in which a value of the first constraint function corresponding to the solution candidate obtained by the local search using each value of the first coefficient approaches a target value which is a positive value.

9. A data processing method executed by a computer, the data processing method comprising:

acquiring evaluation function information of an evaluation function of a combinatorial optimization problem from storage means (11), the evaluation function including a sum of an objective function and one or more constraint functions including a first constraint function weighted by a first coefficient representing a weight of a first constraint condition; and
changing, in a course of repeatedly executing a local search for searching for a solution candidate of the combinatorial optimization problem using the evaluation function information while changing a value of the first coefficient, the value of the first coefficient in a direction in which a value of the first constraint function corresponding to the solution candidate obtained by the local search using each value of the first coefficient approaches a target value that is a positive value.

$$E(x) = C(x) + \gamma_t V(x)$$

$C(\mathbf{x})$: OBJECTIVE FUNCTION
$V(\mathbf{x})$: CONSTRAINT FUNCTION
$\gamma_t$: CONSTRAINT COEFFICIENT

ACQUIRE EVALUATION
FUNCTION INFORMATION    S1

PERFORM INITIALIZATION
$(\gamma_t = \gamma_0)$    S2

EXECUTE LOCAL SEARCH    S3

CALCULATE V($\mathbf{x}^*$)    S4

CHANGE VALUE OF $\gamma_t$    S5

\<EXAMPLE IN WHICH AFTER CONSTRAINT
SATISFACTION SOLUTION (V($\mathbf{x}^*$) = 0) IS
OBTAINED, VALUE OF $\gamma_t$ IS CHANGED\>

$V(\mathbf{x}^*) > V_{target}$?

YES    NO

INCREASE VALUE
OF $\gamma_t$(USE, FOR
EXAMPLE, $\gamma_t \times c_1$
OR LUT)

DECREASE VALUE
OF $\gamma_t$(USE, FOR
EXAMPLE, $\gamma_t/c_2$
OR LUT)

$\mathbf{x}^*$: SOLUTION CANDIDATE OBTAINED IN
CURRENT LOCAL SEARCH

$V(\mathbf{x}^*)$: CONSTRAINT FUNCTION VALUE
CORRESPONDING TO $\mathbf{x}^*$

$V_{target}$: TARGET VALUE (POSITIVE VALUE)

$c_1$, $c_2$: COEFFICIENT

LUT: LOOK-UP-TABLE

10
DATA PROCESSING
DEVICE

12    11

PROCESSING
UNIT

STORAGE UNIT

EVALUATION
FUNCTION
INFORMATION

# FIG. 1

FIG. 2

FIG. 3

DATA PROCESSING APPARATUS — 20

PROCESSOR — 21

RAM — 22

HDD — 23

GPU — 24

INPUT INTERFACE — 25

MEDIUM READER — 26

COMMUNI-CATION INTERFACE — 27

BUS

DISPLAY — 24a

INPUT DEVICE — 25a

RECORDING MEDIUM — 26a

NETWORK — 27a

DATA PROCESSING
APPARATUS

20

EVALUATION
FUNCTION
INFORMATION
STORAGE UNIT

31

32

$\gamma_t$, $V_{target}$

SEARCH CONTROL
UNIT

33

LOCAL SEARCH
EXECUTION UNIT

$V_{target}$    $\gamma_t$

36

$\gamma_t$, $V(\mathbf{x}^*)$

LUT UPDATE UNIT

35

$\mathbf{x}^*$, $E(\mathbf{x}^*)$

34

37

SOLUTION
HOLDING
UNIT

OUTPUT UNIT

LUT
STORAGE
UNIT

FIG. 4

$\gamma_s$: [0.1, 0.21, 0.29, 0.51, 0.61, 0.74, 0.89, 1.1]
$V_s$: [631, 165, 76, 17, 13, 5, 5, 0]

35a

## FIG. 5

START

READ EVALUATION FUNCTION INFORMATION — S10

INITIALIZATION : $\gamma_t = \gamma_0$, $c_1$, $c_2$, $V_{target}$, up = true, t = 0, $N_{trial}$ — S11

LOCAL SEARCH
(SEARCH FOR x* WHICH MINIMIZES E(x)) — S12

$t \leftarrow t + 1$ — S13

S14
up = true ? — YES / NO

S15
V(x*) > 0 ? — NO / YES

S19
V(x*) > $V_{target}$ ? — YES / NO

S17
OUTPUT E(x*) AND x*

S16
up = true, $\gamma_t \leftarrow \gamma_t \times c_1$

S18
up = false, $\gamma_t \leftarrow \gamma_t / c_2$

S20
t < $N_{trial}$ ? — YES / NO

OUTPUT SEARCH RESULT — S21

END

FIG. 6

START

READ EVALUATION FUNCTION INFORMATION $\sim$S30

INITIALIZATION: $\gamma_t = \gamma_0$, $c_1$, $c_2$, $V_{target}$, up = true, t = 0, $N_{trial}$ $\sim$S31

LOCAL SEARCH
(SEARCH FOR x* WHICH MINIMIZES E(x)) $\sim$S32

$t \leftarrow t + 1$ $\sim$S33

UPDATE LUT USING $\gamma_t$ AND V(x*) $\sim$S34

S35
up = true ?
YES — NO

S36
V(x*) > 0 ?
YES — NO

S38
OUTPUT E(x*) AND x*

S40
V(x*) > $V_{target}$ ?
NO — YES

S37
$\gamma_t \leftarrow \gamma_t \times c_1$

S39
up = false,
$\gamma_t \leftarrow$ LUT($V_{target}$)

S41
$\gamma_t \leftarrow \gamma_t / c_2$

S42
up = true

S43
t < $N_{trial}$ ?
YES
NO

S44
OUTPUT SEARCH RESULT

END

FIG. 7

START

READ EVALUATION FUNCTION INFORMATION — S50

INITIALIZATION: $\gamma_t = \gamma_0$, $c_1$, $c_2$, $V_{target}$, up = true, t = 0, $N_{trial}$ — S51

LOCAL SEARCH
(SEARCH FOR x* WHICH MINIMIZES E(x)) — S52

$t \leftarrow t + 1$ — S53

UPDATE LUT USING $\gamma_t$ AND V(x*) — S54

S55
up = true ?   YES / NO

S56
V(x*) > 0 ?   YES / NO

S58
OUTPUT E(x*) AND x*

S60
V(x*) > $V_{target}$ ?   NO / YES

S57
$\gamma_t \leftarrow \gamma_t \times c_1$

S59
up = false,
$\gamma_t \leftarrow LUT(V_{target})$

S61
$\gamma_t \leftarrow \gamma_t / c_2$

S62
up = true,
$\gamma_t \leftarrow LUT(0)$

S63
t < $N_{trial}$ ?   YES / NO

OUTPUT SEARCH RESULT — S64

FIG. 8

END

FIG. 9

START

ACQUIRE $\gamma_t$ AND V(x*) ⟩∼S70

DETERMINE k THAT
SATISFIES ($\gamma_k < \gamma_t < \gamma_{k+1}$) ⟩∼S71

S72

S73

YES    $V_k > V(x^*)$ ?    NO    S74

INSERT $\gamma_t$ AND V(x*)
INTO (k + 1)TH OF $\gamma_s$
AND $V_s$, RESPECTIVELY

INSERT $\gamma_t$ AND $V_k$ INTO
(k + 1)TH OF $\gamma_s$ AND $V_s$,
RESPECTIVELY

S75

m = k + 2

S76

$V_m < V(x^*)$ ?    NO    S77

YES

REPLACE m–TH
VALUE ($V_m$) OF $V_s$
WITH V(x*)

S78

m ← m + 1

END

FIG. 10

35a

$\gamma_s$: [0.1, 0.21, 0.29, 0.51, 0.61, 0.74, 0.89, 1.1]
$V_s$: [631, 165, 76, 17, 13, 5, 5, 0]

$V_k$ $V_{k+1}$

LOCAL SEARCH USING $\gamma_t$ = 0.5

CASE WHERE V(x*) = 80 ($V_k$ < V(x*))

35b

$\gamma_s$: [0.1, 0.21, 0.29, **0.50**, 0.51, ···]
$V_s$: [631, 165, 76, **76**, 13, ···]

$V_k$ $V_{k+1}$

CASE WHERE V(x*) = 25 ($V_k$ > V(x*) ≥ $V_{k+1}$)

35c

$\gamma_s$: [0.1, 0.21, 0.29, **0.50**, 0.51, ···]
$V_s$: [631, 165, 76, **25**, 13, ···]

$V_k$ $V_{k+1}$

CASE WHERE V(x*) = 7 (V(x*) < $V_{k+1}$)

35d

$\gamma_s$: [0.1, 0.21, 0.29, **0.50**, 0.51, 0.61, ···]
$V_s$: [631, 165, 76, **7**, **7**, 5, ···]

$V_k$ $V_{k+1}$ $V_{k+2}$
$= V_m$

# FIG. 11

START

READ EVALUATION FUNCTION INFORMATION — S10

INITIALIZATION: $\gamma_t = \gamma_0$, $c_1$, $c_2$, $V_{target}$, up = true, t = 0, $N_{trial}$ — S11

LOCAL SEARCH
(SEARCH FOR x* WHICH MINIMIZES E(x)) — S12

$t \leftarrow t + 1$ — S13

S14
up = true ?
YES / NO

S15
V(x*) > 0 ?
NO / YES

S19
V(x*) > $V_{target}$ ?
YES / NO

S17
OUTPUT E(x*) AND x*

S16
up = true, $\gamma_t \leftarrow \gamma_t \times c_1$

S18
up = false, $\gamma_t \leftarrow \gamma_t / c_2$

S20
t < $N_{trial}$ ?
YES / NO

S21
OUTPUT SEARCH RESULT

S22
CONSTRAINT SATISFACTION SOLUTION IS UPDATED IN PREDETERMINED PERIOD?
YES / NO

S23
INCREASE $V_{target}$

END

FIG. 12

## FIG. 13A

## FIG. 13B

## FIG. 13C

START

READ EVALUATION FUNCTION INFORMATION — S80

INITIALIZATION : $\gamma_t = \gamma_0$, $c_1$, $c_2$, $t = 0$, $N_{trial}$ — S81

LOCAL SEARCH
(SEARCH FOR $x^*$ WHICH MINIMIZES $E(x)$) — S82

$t \leftarrow t + 1$ — S83

S84
$V(x^*) > 0$ ?

NO

YES

S86
OUTPUT $E(x^*)$ AND $x^*$

S85
$\gamma_t \leftarrow \gamma_t \times c_1$

S87
$\gamma_t \leftarrow \gamma_t / c_2$

S88
$t < N_{trial}$ ?

YES

NO

OUTPUT SEARCH RESULT — S89

END

FIG. 14

# FIG. 15A

PROCESSING
PROCEDURE TAKEN AS
COMPARATIVE EXAMPLE
(PARALLEL NUMBER: 40)

# FIG. 15B

PROCESSING PROCEDURE
OF FIRST EXAMPLE
(PARALLEL NUMBER: 40)

<CUMULATIVE DISTRIBUTION OF MINIMUM
VALUE OF E(x) AFTER 500 TRIALS>

FIG. 16

FIG. 17

FIG. 18

**EUROPEAN SEARCH REPORT**

Europäisches Patentamt
European Patent Office
Office européen des brevets

**Application Number**

EP 25 18 5358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GLOVER F ET AL: "Tabu search", 12 January 2003 (2003-01-12), HANDBOOK OF COMBINATORIAL OPTIMIZATION, KLUWER ACADEMIC PUBLISHERS, NL, PAGE(S) 1 - 48, XP007917013, ISBN: 978-0-7923-5018-7 * section 4 * | 1-9 | INV. G06F17/11 G06N3/086 |
| A | WEI ZEQUN ET AL: "Responsive strategic oscillation for solving the disjunctively constrained knapsack problem", EUROPEAN JOURNAL OF OPERATIONAL RESEARCH, [Online] vol. 309, no. 3, 10 February 2023 (2023-02-10), pages 993-1009, XP093341809, AMSTERDAM, NL ISSN: 0377-2217, DOI: 10.1016/j.ejor.2023.02.009 Retrieved from the Internet: URL:https://www.sciencedirect.com/science/article/pii/S0377221723001248/pdfft?md5=81f8a9410f4348a72e9758d8361b91f5&pid=1-s2.0-S0377221723001248-main.pdf> [retrieved on 2025-11-28] * section 2 * | 1-9 | |
| A | VADLAMANI SRI KRISHNA ET AL: "Combinatorial optimization using the Lagrange primal-dual dynamics of parametric oscillator networks", PHYSICAL REVIEW APPLIED, vol. 21, no. 4, 20 February 2024 (2024-02-20), XP093340834, ISSN: 2331-7019, DOI: 10.1103/PhysRevApplied.21.044042 * sections II-IV * | 1-9 | TECHNICAL FIELDS SEARCHED (IPC)<br><br>G06F<br>G06N |

The present search report has been drawn up for all claims

| Place of search | Date of completion of the search | Examiner |
|---|---|---|
| Berlin | 28 November 2025 | Virnik, Elena |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004 A
- JP 361991 A
- US 20170011143
- WO 9806550 A
- US 20030226122

**Non-patent literature cited in the description**

- **J. C. BEAN** ; **A. B. HADJ-ALOUANE**. A Dual Genetic Algorithm for Bounded Integer Programs. *University of Michigan Technical Report*, 1992, 92-53
- **AKI DOTE** ; **KOJI HUKUSHIMA**. Effect of Constraint Relaxation on the Minimum Vertex Cover Problem in Random Graphs. *Physical Review E*, 05 April 2024, vol. 109 (4), 044304